# EUROPEAN PATENT APPLICATION

(11) **EP 3 395 589 A1**
(43) Date of publication of application: **31.10.2018**
(21) Application number: 18154009.7
(22) Date of filing: 30.01.2018
(51) Int. Cl.: B60C 15/00, B60C 9/22, B60C 9/20, B60C 11/00, B60C 9/28

(54) **TIRE FOR TWO-WHEELED AUTOMOTIVE VEHICLE**

(30) Priority: 26.04.2017 JP 2017086724
(71) Applicant: Sumitomo Rubber Industries, Ltd., Kobe-shi Hyogo-ken (JP)
(72) Inventor: MATSUMOTO, Yugo, Kobe-shi, Hyogo 651-0072 (JP)
(74) Representative: Manitz Finsterwald Patentanwälte PartmbB

(57) **Abstract**

Provided is a tire, for a two-wheeled automotive vehicle, which not only exhibits excellent braking performance and traction performance in high speed cornering but also has excellent transient characteristics.

A tire 2 includes a band 14 disposed inward of a tread 4 in a radial direction. A band cord of the band 14 is helically wound and extends in a circumferential direction. The band 14 includes a center portion 38 and a pair of side portions 40. A density Ec of the band cord in the center portion 38 is less than a density Em of the band cord in each side portion 40. An outer end Pb of the band 14 is disposed inward of an axially outer end Pa of an inner surface 42 in the axial direction, and is disposed outward of a straight line RL that defines a rim width, in the axial direction. The tread 4 includes a center region 48 provided such that the center portion 38 is disposed inward of the center region 48, a pair of middle regions 50 provided such that the side portions 40 are disposed inward of the middle regions 50, and a pair of shoulder regions 52 disposed adjacent to outer sides, in the axial direction, of the middle regions 50, respectively.

## Description

### BACKGROUND OF THE INVENTION

### Field of the Invention

The present invention relates to pneumatic tires to be mounted to two-wheeled automotive vehicles.

### Description of the Background Art

A tire for a two-wheeled automotive vehicle is disclosed in Japanese Laid-Open Patent Publication No. 2013-132965. In the tire, rubber having a high loss tangent is disposed in a shoulder portion of a tread. Ends of a band cord are different among a crown portion, a middle portion, and a shoulder portion of a band. Thus, the tire allows both grip performance and traction performance to be exhibited during cornering.

### SUMMARY OF THE INVENTION

A two-wheeled automotive vehicle is rapidly braked when the vehicle shifts from high speed straight running to cornering. In the rapid braking, a tire in a front wheel is under a heavy load, and a tire in a rear wheel is under a relatively light load. The two-wheeled automotive vehicle is rapidly accelerated when the vehicle shifts from the cornering to high speed straight running. In the rapid acceleration, the tire in the rear wheel is under a heavy load. In the high speed cornering, high braking performance and high traction performance are required. In order to improve braking performance and traction performance, the tire is required to have both high stiffness and high grip performance. Furthermore, the tire is required to maintain and improve transient characteristics. It is not easy to improve braking performance and traction performance without deteriorating the transient characteristics.

An object of the present invention is to provide a tire, for a two-wheeled automotive vehicle, which not only exhibits excellent braking performance and traction performance in high speed cornering but also has excellent transient characteristics.

A tire, for a two-wheeled automotive vehicle, according to the present invention includes: a tread having an outer surface that forms a tread surface; and a band disposed inward of the tread in a radial direction. The band includes a band cord. The band cord is helically wound and extends in a circumferential direction. The band includes a center portion disposed at a center in an axial direction, and a pair of side portions that extend outward from outer ends of the center portion in the axial direction. A density Ec of the band cord in the center portion is less than a density Em of the band cord in each side portion. An outer end of the band is disposed inward of an axially outer end of an inner surface in the axial direction, and is disposed outward of a straight line RL that defines a rim width, in the axial direction. The tread includes a center region provided such that the center portion is disposed inward of the center region, a pair of middle regions provided such that the side portions are disposed inward of the middle regions, and a pair of shoulder regions disposed adjacent to outer sides, in the axial direction, of the middle regions, respectively.

Preferably, the tread includes a base layer, and a cap layer which is layered outward of the base layer in the radial direction. A complex elastic modulus Eb* of the base layer is higher than a complex elastic modulus Ec* of the cap layer. The center region includes a base contact region disposed at the center in the axial direction, and a pair of cap contact regions disposed adjacent to outer sides, in the axial direction, of the base contact region. The base layer forms the tread surface in the base contact region, and the cap layer forms the tread surface in each of the cap contact regions.

Preferably, a ratio of a width Wcc of the base contact region to a tread width Wt is not less than 0.05 and not greater than 0.15.

Preferably, a ratio of the complex elastic modulus Eb* to the complex elastic modulus Ec* is not less than 1.3 and not greater than 2.0.

Preferably, a ratio of a width Wbc of the center portion to a width Wb of the band is not less than 0.1 and not greater than 0.3.

Preferably, a ratio of the density Ec to the density Em is not less than 0.75 and not greater than 0.90.

Preferably, the tire includes a belt disposed inward of the band in the radial direction. An axially outer end of the belt is disposed inward of the axially outer end of the inner surface in the radial direction.

Preferably, the belt includes an inner layer, and an outer layer that is layered outward of the inner layer in the radial direction. An axially outer end of the outer layer is disposed between an axially outer end of the band and an axially outer end of the inner layer in the radial direction.

In the tire according to the present invention, since the band includes the center portion, contact performance is excellent in the center region of the tread. The center region can sufficiently contact with the ground even under a relatively light load. Since the band includes the side portions, high stiffness against a heavy load in rapid acceleration is exhibited in the middle regions. Furthermore, in the tire, even when the sidewall has high stiffness such that the tire exhibits high stiffness, stiffness is inhibited from being enhanced in the shoulder region. The tire exhibits improved braking performance and grip performance in cornering while having excellent balance in stiffiiess. The tire also has excellent transient characteristics.

### BRIEF DESCRIPTION OF THE DRAWINGS

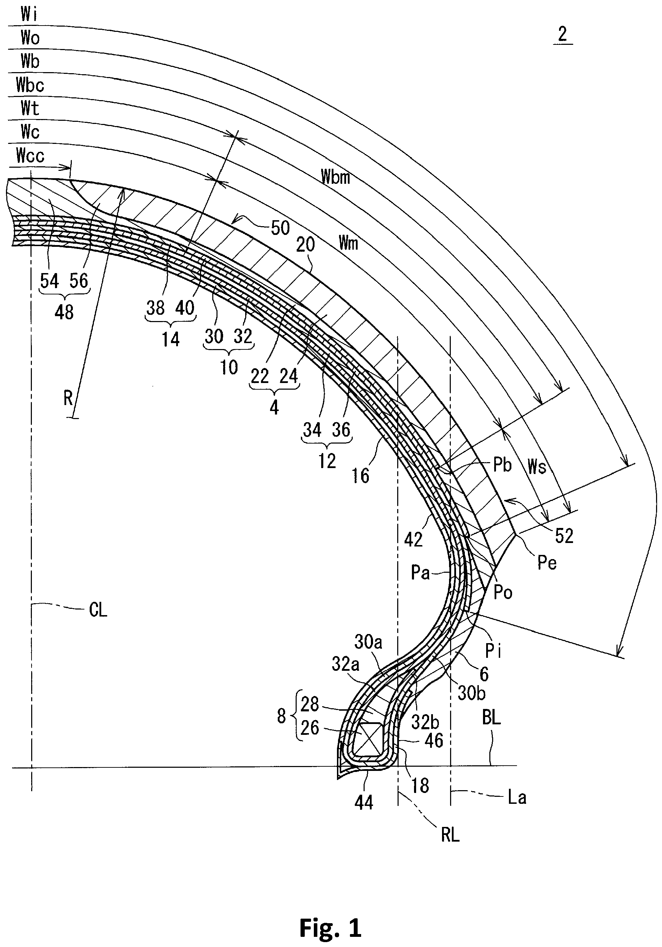

FIG. 1 is a cross-sectional view of a part of a pneumatic tire according to one embodiment of the present invention.

### DESCRIPTION OF THE PREFERRED EMBODIMENTS

The following will describe in detail the present invention based on preferred embodiments with reference where appropriate to the accompanying drawing.

FIG. 1 shows a pneumatic tire 2. In FIG. 1, the up-down direction represents the radial direction of the tire 2, the left-right direction represents the axial direction of the tire 2, and the direction perpendicular to the surface of the drawing sheet represents the circumferential direction of the tire 2. An alternate long and short dash line CL represents an equator plane of the tire 2. The shape of the tire 2 is symmetric about the equator plane except for a tread pattern. A solid line BL represents a bead base line. The bead base line is a line that defines a rim diameter (see JATMA) of a normal rim on which the tire 2 is mounted. The bead base line extends in the axial direction.

The tire 2 includes a tread 4, a pair of sidewalls 6, a pair of beads 8, a carcass 10, a belt 12, a band 14, an inner liner 16, and a pair of chafers 18. The tire 2 is of a tubeless type. The tire 2 is mounted to a rear wheel of a two-wheeled automotive vehicle.

The tread 4 has a shape projecting outward in the radial direction. The tread 4 forms a tread surface 20 that comes into contact with a road surface. The tread surface 20 extends from one of tread ends Pe to the other of the tread ends Pe, which is not shown, in the axial direction. The tread 4 includes a base layer 22 and a cap layer 24. The base layer 22 extends from one end of the tread 4 to the other end of the tread 4 in the axial direction. The cap layer 24 is disposed outward of a part of the base layer 22 in the radial direction. The cap layer 24 is layered over the part of the base layer 22. The base layer 22 is formed from a crosslinked rubber having excellent adhesiveness. The cap layer 24 is formed from a crosslinked rubber having excellent wear resistance, heat resistance, and grip performance. A complex elastic modulus Eb* of the base layer 22 is higher than a complex elastic modulus Ec* of the cap layer 24. The tread 4 may have grooves formed therein. A tread pattern is formed by the grooves.

Each sidewall 6 extends almost inward from the end of the tread 4 in the radial direction. The radially outer end of the sidewall 6 is joined to the tread 4. The sidewall 6 is formed from a crosslinked rubber having excellent cut resistance and weather resistance. The sidewall 6 prevents damage to the carcass 10.

Each bead 8 is disposed inward of the sidewall 6 in the radial direction. The bead 8 includes a core 26 and an apex 28 that extends outward from the core 26 in the radial direction. The core 26 is ring-shaped, and includes a wound non-stretchable wire. Atypical material of the wire is steel. The apex 28 is tapered outward in the radial direction. The apex 28 is formed from a highly hard crosslinked rubber.

The carcass 10 includes a first ply 30 and a second ply 32. The first ply 30 and the second ply 32 are each extended on and between the beads 8 on both sides, along the tread 4 and the sidewalls 6. The first ply 30 is turned up around the core 26 from the inner side toward the outer side in the axial direction. By the turning-up, the first ply 30 includes a main portion 30a and turned-up portions 30b. The second ply 32 is turned up around the core 26 from the inner side toward the outer side in the axial direction. By the turning-up, the second ply 32 includes a main portion 32a and turned-up portions 32b. The end of the turned-up portion 30b of the first ply 30 is disposed outward of the end of the turned-up portion 32b of the second ply 32 in the radial direction.

The first ply 30 and the second ply 32 each include multiple carcass cords aligned with each other, and topping rubber. An absolute value of an angle of each carcass cord relative to the equator plane is from 75° to 90°. In other words, the carcass 10 forms a radial structure. The carcass cord is formed from an organic fiber. Preferable examples of the organic fiber include polyester fibers, nylon fibers, rayon fibers, polyethylene naphthalate fibers, and aramid fibers. The carcass may be formed from one carcass ply.

The belt 12 is disposed inward of the tread 4 in the radial direction. The belt 12 is layered outward of the carcass 10 in the radial direction. The belt 12 reinforces the carcass 10. The belt 12 includes an inner layer 34 and an outer layer 36. The inner layer 34 extends from one of axially outer ends Pi to the other of the axially outer ends Pi, which is not shown, in the axial direction. The outer layer 36 extends from one of axially outer ends Po to the other of the axially outer ends Po, which is not shown, in the axial direction. The inner layer 34 and the outer layer 36 each include multiple belt cords aligned with each other, and topping rubber, which is not shown. Each belt cord is tilted relative to the equator plane. An absolute value of a tilt angle is typically not less than 10° and not greater than 35°. A direction in which the belt cord of the inner layer 34 is tilted relative to the equator plane is opposite to a direction in which the belt cord of the outer layer 36 is tilted relative to the equator plane. A preferable material of the belt cord is an organic fiber. Preferable examples of the organic fiber include nylon fibers, polyester fibers, rayon fibers, polyethylene naphthalate fibers, and aramid fibers.

The band 14 is disposed outward of the carcass 10 in the radial direction. The band 14 is disposed inward of the tread 4 in the radial direction. The band 14 is disposed outward of the belt 12 in the radial direction. The band 14 extends along the tread 4 from one of axially outer ends Pb to the other of the axially outer ends Pb. The band 14 reinforces the carcass 10.

The band 14 includes a center portion 38 and a pair of side portions 40. The center portion 38 is disposed at the center in the axial direction across the equator plane. One of the side portions 40 extends outward from one of outer ends of the center portion 38 to the one of the outer ends Pb in the axial direction. The other of the side portions 40 extends outward from the other of the outer ends of the center portion 38 to the other of the outer ends Pb in the axial direction, which is not shown.

The band 14 includes a band cord and topping rubber, which are not shown. The band cord is helically wound from the one of the outer ends Pb to the other of the outer ends Pb. The cord extends substantially in the circumferential direction. A tilt angle of the band cord relative to the circumferential direction is not greater than 5° and more preferably not greater than 2°. A density Ec of the band cord in the center portion 38 is less than a density Em of the band cord in each of the paired side portions 40. The densities Ec and Em are each obtained as ends that represent the number of the band cords per a width of 5 cm, in the axial direction, of the band 14. The band cord is formed from an organic fiber. Preferable examples of the organic fiber include nylon fibers, polyester fibers, rayon fibers, polyethylene naphthalate fibers, and aramid fibers.

The inner liner 16 is disposed inward of the carcass 10. Near the equator plane CL, the inner liner 16 is joined to the inner surface of the carcass 10. The inner liner 16 is formed from a crosslinked rubber having excellent airtightness. Atypical base rubber of the inner liner 16 is an isobutylene-isoprene-rubber or halogenated isobutylene-isoprene-rubber. The inner liner 16 forms an inner surface 42 that is an inner side surface of the tire 2. The inner liner 16 maintains internal pressure of the tire 2. In FIG. 1, reference character Pa represents an axially outer end of the inner surface 42. The outer end Pa is positioned on the outermost side, in the axial direction, of the inner surface 42. The outer end Pa is disposed inward of the tread end Pe in the axial direction.

Each chafer 18 is disposed near the bead 8. When the tire 2 is mounted on a not-illustrated rim, the chafer 18 contacts with the rim. By the contact, a portion near the bead 8 is protected. The chafer 18 includes a seat surface 44 that comes into contact with a rim seat, and a flange contact surface 46 that comes into contact with a rim flange. The chafer 18 is formed from, for example, a fabric and a rubber impregnated into the fabric.

The tread 4 includes a center region 48, a pair of middle regions 50, and a pair of shoulder regions 52. The center region 48 is disposed at the center in the axial direction across the equator plane. The middle regions 50 are disposed adjacent to the outer sides, respectively, of the center region 48 in the axial direction. The shoulder regions 52 are disposed adjacent to the outer sides of the middle regions 50, respectively, in the axial direction.

The center portion 38 of the band 14 is disposed inward of the center region 48. The side portion 40 of the band 14 is disposed inward of the middle region 50. The band 14 is not disposed inward of the shoulder region 52. In the direction along the tread surface 20 on the cross-section shown in FIG. 1, the shoulder region 52 is disposed outward of the outer end Pb of the band 14.

The center region 48 includes a base contact region 54 and a pair of cap contact regions 56. The base contact region 54 is disposed at the center in the axial direction across the equator plane. The cap contact regions 56 are disposed adjacent to the outer sides, respectively, of the base contact region 54 in the axial direction. In the base contact region 54, the cap layer 24 is not layered over the base layer 22. In this region, the base layer 22 forms the tread surface 20. In each of the cap contact regions 56, each of the middle regions 50, and each of the shoulder regions 52, the cap layer 24 is layered over the base layer 22. In these regions, the cap layer 24 forms the tread surface 20. The axially inner end portion of the cap layer 24 is disposed in the cap contact region 56. The thickness of the axially inner end portion is gradually reduced from the outer side toward the inner side in the axial direction. According to the thickness of the cap layer 24 being gradually reduced, the thickness of the base layer 22 is gradually increased from the outer side toward the inner side in the axial direction in a portion inward of the axially inner end portion of the cap layer 24.

In FIG. 1, a single-headed arrow Wt represents a tread width. The tread width Wt is a width from one of the tread ends Pe to the other of the tread ends Pe. A single-headed arrow Wc represents a width of the center region 48. A double-headed arrow Wm represents a width of the middle region 50. A double-headed arrow Ws represents a width of the shoulder region 52. A single-headed arrow Wcc represents a width of the base contact region 54. The tread width Wt, the width Wc, the width Wm, the width Ws, and the width Wcc are measured along the tread surface 20.

A single-headed arrow Wi represents a width of the inner layer 34. The width Wi is measured along the inner layer 34. A single-headed arrow Wo represents a width of the outer layer 36. The width Wo is measured along the outer layer 36. A single-headed arrow Wb represents a width of the band 14. A single-headed arrow Wbc represents a width of the center portion 38. A double-headed arrow Wbm represents a width of the side portion 40. The width Wb, the width Wbc, and the width Wbm are measured along the band 14.

An alternate long and two short dashes line RL represents a straight line that defines a rim width (see JATMA) of a rim on which the tire 2 is mounted. The straight line RL extends in the radial direction. An alternate long and two short dashes line La represents a straight line that extends in the radial direction through the outer end Pa of the inner surface 42.

A single-headed arrow R represents a curvature radius of the tread surface 20 at the equator plane. The curvature radius R of the tire 2 that is mounted to a two-wheeled automotive vehicle is less than a curvature radius of a tire that is mounted to a four-wheeled automotive vehicle. Thus, a rider is allowed to easily tilt the two-wheeled automotive vehicle inward during cornering. By the tilting, cornering of the two-wheeled automotive vehicle is facilitated. The curvature radius R is typically not less than 50 mm and not greater than 150 mm.

The tire 2 is mounted to a rear wheel of a two-wheeled automotive vehicle. At the early stage of cornering at which high speed straight running shifts to cornering, a high braking force acts on the two-wheeled automotive vehicle. Due to the high braking force, a front tire is under a heavy load, and the tire 2 mounted to the rear wheel is under a relatively light load.

In the tire 2, the density Ec of the band cord in the center portion 38 is less than the density Em of the band cord in the side portion 40. The center region 48 in which the center portion 38 is disposed is deformed more easily than the middle region 50 in which the side portion 40 is disposed. At the early stage of the cornering described above, the center region 48 can sufficiently contact with a road surface also under a relatively light load.

At the later stage of the cornering at which the high speed cornering shifts to straight running, the two-wheeled automotive vehicle is rapidly accelerated. By the rapid acceleration, the tire 2 is under a heavy load. In the rapid acceleration, the middle region 50 mainly contacts with the ground. Since the side portion 40 of the band 14 is disposed inward of the middle region 50, stiffness is high in the middle region 50. In the middle region 50, high stiffness can be exhibited especially in the circumferential direction. The tire 2 allows high traction performance to be exhibited at the later stage of cornering.

From the viewpoint of exhibiting the high traction performance, the density Em of the band cord in the side portion 40 is preferably not less than 25 (band cords/5 cm) and more preferably not less than 30 (band cords/cm). Meanwhile, from the viewpoint that the center region 48 is easily deformed and balance in stiffness between the center region 48 and the middle region 50 is not reduced, the density Em is preferably not greater than 70 (band cords/5 cm) and more preferably not greater than 60 (band cords/5 cm).

The sidewall 6 needs to have sufficient stiffness in order to be resistant to a heavy load applied to the tire 2. The shoulder region 52 is disposed outward of the sidewall 6 in the radial direction. By improving stiffness of the sidewall 6, stiffness is improved also in the shoulder region 52. In the tire 2, the band 14 is not disposed inward of the shoulder region 52. In the tire 2, the outer end Pb of the band 14 is disposed inward of the outer end Pa of the inner surface 42 in the axial direction. Thus, stiffness in the shoulder region 52 disposed outward of the sidewall 6 in the radial direction is relatively low as compared to stiffness in the middle region 50. Meanwhile, the outer end Pb is disposed outward of the straight line RL that defines the rim width, in the axial direction. Thus, high stiffness can be exhibited in the middle region 50. In the tire 2, while high stiffness is exhibited in the middle region 50, balance in stiffness between the tread 4 and the sidewall 6 can be optimized.

In the tire 2, in the base contact region 54 of the center region 48, the base layer 22 forms the tread surface 20. Since the base contact region 54 is provided, also when the center portion 38 is disposed inward of the center region 48, stiffness can be sufficiently exhibited in the center region 48 in the case of braking in high speed straight running. In the center region 48, since the center portion 38 and the base contact region 54 are provided, contact performance and stiffness are sufficiently exhibited in the case of braking in high speed straight running. The tire 2 exhibits excellent braking performance in high speed straight running.

In the tire 2, the center region 48 includes the cap contact region 56. In the cap contact region 56, the cap layer 24 forms the tread surface 20. The complex elastic modulus Ec* of the cap layer 24 is less than the complex elastic modulus Eb* of the base layer 22. The cap contact region 56 contacts with the ground, whereby grip force can be sufficiently exhibited in the center region 48. Since the cap contact region 56 is provided, braking performance and traction performance can be sufficiently exhibited in the center region 48.

In the tire 2 in which the width Wcc of the base contact region 54 is great, stiffness is high in the center region 48. The tire 2 allows braking performance in high speed straight running to be improved. In this viewpoint, a ratio (Wcc/Wt) of the width Wcc of the base contact region 54 to the tread width Wt is preferably not less than 0.05. Meanwhile, the tire 2, in which the width Wcc is small, allows the cap contact region 56 to easily contact with the ground in the straight running. The tire 2 exhibits excellent grip force. The tire 2 exhibits excellent braking performance and traction performance. In this viewpoint, the ratio (Wcc/Wt) is preferably not greater than 0.15.

The tire 2, in which the complex elastic modulus Ec* of the cap layer 24 is low, exhibits excellent grip performance. In this viewpoint, the complex elastic modulus Ec* is preferably not higher than 3.0 MPa. Meanwhile, the tire 2, in which the complex elastic modulus Ec* is high, provides excellent steering stability. In this viewpoint, the complex elastic modulus Ec* is preferably not less than 1.0 MPa.

In the tire 2, the cap layer 24 forms the tread surface 20 also in the middle region 50 and the shoulder region 52. Therefore, high grip force can be exhibited in the middle region 50 and the shoulder region 52. Thus, high braking performance and traction performance can be exhibited in cornering.

The tire 2, in which the complex elastic modulus Eb* of the base layer 22 is high, contributes to improvement of stiffness in the center region 48. The tire 2 allows braking performance in high speed straight running to be improved. In this viewpoint, a ratio (Eb*/Ec*) of the complex elastic modulus Eb* to the complex elastic modulus Ec* is preferably not less than 1.3 and more preferably not less than 1.5. Meanwhile, in the tire 2 in which the complex elastic modulus Eb* is excessively high, balance in stiffness between the tread 4 and the sidewall 6 is reduced. Reduction of balance in stiffness leads to reduction of steering stability. From the viewpoint of appropriate balance in stiffness, the ratio (Eb*/Ec*) is preferably not greater than 2.0.

In the tire 2 in which the width Wbc of the center portion 38 is great, contact performance is excellent in the center region 48. In this viewpoint, a ratio (Wbc/Wb) of the width Wbc of the center portion 38 to the width Wb of the band 14 is preferably not less than 0.10 and more preferably not less than 0.15. Meanwhile, the tire 2 in which the width Wbc is excessively great causes braking performance and traction performance to be degraded in cornering. From the viewpoint of maintaining and improving braking performance and traction performance, the ratio (Wbc/Wb) is preferably not greater than 0.30 and more preferably not greater than 0.25.

The tire 2, in which the density Ec of the band cord in the center portion 38 is small, allows stiffness in the center region 48 to be sufficiently reduced. Thus, stiffness in the center region 48 relative to stiffness in the middle region 50 is sufficiently reduced. Balance in stiffness between the center region 48 and the middle region 50 can be improved. In this viewpoint, a ratio (Ec/Eb) of the density Ec to the density Em of the band cord in the side portion 40 is preferably not greater than 0.90. Meanwhile, in the tire 2 in which the density Ec is great, stiffness is high in the center region 48. Durability is excellent in the center region 48. In this viewpoint, the ratio (Ec/Eb) is preferably not less than 0.60 and more preferably not less than 0.75.

In the tire 2, the inner layer 34, the outer layer 36, and the band 14 are layered in the radial direction. Holding effect of the inner layer 34 and the outer layer 36 allows stiffness of the tread 4 to be enhanced. The tire 2 can exhibit high cornering performance. Furthermore, by the band 14 being layered, radial growth of the tire 2 in high speed rotation is inhibited.

In the tire 2, the outer end Pi of the inner layer 34 is disposed inward of the outer end Pa of the inner surface 42 in the radial direction. The inner layer 34 contributes to improvement of stiffness of the sidewall 6. The sidewall 6 can sufficiently exhibit stiffness against a heavy load. Furthermore, in the tire 2, the turned-up portion 30b of the first ply 30 and the end portion of the inner layer 34 are layered over each other, whereby stiffness of the sidewall 6 is improved. In the tire 2, instead of the outer end Pi, the outer end Po of the outer layer 36 may be disposed inward of the outer end Pa of the inner surface 42 in the radial direction.

As described above, even in a case where stiffness of the sidewall 6 is enhanced, when the tread 4 and the band 14 are used in combination, the tire 2 has excellent balance in stiffness between the tread 4 and the sidewall 6. Particularly in the tire 2 that is used with low air pressure, the effect of improving stiffness by the tread 4, the belt 12, and the band 14 is likely to be exhibited. The tire 2 which is thus structured allows an effect of improving balance in stiffness to a high degree to be obtained. In this viewpoint, the present invention is suitable to the tire 2 which is used with an air pressure that is not higher than 200 kPa, and is more preferably suitable to the tire 2 which is used with an air pressure that is not higher than 190 kPa.

In the tire 2, the outer end Po of the outer layer 36 is disposed between the outer end Pb of the band 14 and the outer end Pi of the inner layer 34. The inner layer 34 and the outer layer 36 are layered over each other in the belt 12, whereby stiffness of the tread 4 and stiffness of the sidewall 6 are enhanced while balance in stiffness is maintained. Thus, the tire 2 can sufficiently exhibit stiffness during cornering in which the shoulder region 52 contacts with the ground.

In the present invention, the complex elastic modulus Eb* and the complex elastic modulus Ec* are measured by using the viscoelasticity spectrometer (trade name "VESF-3" manufactured by Iwamoto Seisakusho) under the following measurement conditions in compliance with the standard of "JIS K 6394". In this measurement, a plate-shaped test piece (length=45 mm, width=4 mm, thickness=2 mm) is formed from each of the rubber compositions of the base layer 22 and the cap layer 24. This test piece is used for the measurement.
Initial strain: 10%
Amplitude: ±2.5%
Frequency: 10 Hz
Deformation mode: tension
Measurement temperature: 100°C

In the present invention, the dimensions and angles of the components of the tire 2 are measured in a state where the tire 2 is mounted on a normal rim, and the tire 2 is inflated with air to a normal internal pressure. During the measurement, no load is applied to the tire 2. In the description herein, the normal rim represents a rim which is specified according to the standard with which the tire complies. The "standard rim" in the JATMA standard, the "Design Rim" in the TRA standard, and the "Measuring Rim" in the ETRTO standard are included in the normal rim. In the description herein, the normal internal pressure represents an internal pressure which is specified according to the standard with which the tire complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

### [Examples]

Hereinafter, effects of the present invention will become apparent according to examples. However, the present invention should not be restrictively construed based on the description of examples.

### [Example 1]

A tire shown in FIG. 1 was produced. The size of the tire was 200/60R17. In the tire, a ratio (Wbc/Wb), a ratio (Ec/Em), a ratio (Wcc/Wt), and a ratio (Eb*/Ec*) were as indicated below in Table 1.

### [Comparative example 1]

A conventional tire was prepared. In the tire, the outer end of a belt is disposed outward of an axially outer end of an inner surface in the axial direction. The density of belt cords was constant from one of outer ends to the other of the outer ends in the axial direction.

A cap layer of a tread extended continuously from one of tread ends to the other of the tread ends. The other structure was the same as in example 1.

### [Examples 2 to 5]

Tires of examples 2 to 5 were each obtained in the same manner as in example 1 except that a ratio (Wbc/Wb) was as indicated below in Table 1.

### [Examples 6 to 9 and Comparative example 2]

Tires of examples 6 to 9 and comparative example 2 were each obtained in the same manner as in example 1 except that a ratio (Ec/Em) was as indicated below in Table 2.

### [Examples 10 to 13]

Tires of examples 10 to 13 were each obtained in the same manner as in example 1 except that a ratio (Wcc/Wt) was as indicated below in Table 3.

### [Examples 14 to 17]

Tires of examples 14 to 17 were each obtained in the same manner as in example 1 except that a ratio (Eb*/Ec*) was as indicated below in Table 4.

### [Evaluation of performance]

A two-wheeled automotive vehicle (four-cycle), for racing, having an engine displacement of 1000 cc was prepared. Each tire was mounted on a normal rim and mounted to a rear wheel of the two-wheeled automotive vehicle. The tire was inflated with air to an internal pressure of 180 kPa. A commercially available tire (size=120/70ZR17) was mounted to a front wheel and was inflated with air to an internal pressure of 240 kPa. In the two-wheeled automotive vehicle, air pressure of the rear wheel was set to be lower than air pressure of the front wheel. The two-wheeled automotive vehicle was caused to run on a circuit course having an asphalt road surface. A rider made a sensory evaluation for balance in stiffness, transient characteristics, braking performance, and traction performance. The results are indicated below in Tables 1 to 4 as indexes with the value of example 1 being 10. The greater the value of the index is, the better the evaluation is.

### [Table 1]

**Table 1 Evaluation result**

| | Comparative example 1 | Example 4 | Example 2 | Example 1 | Example 3 | Example 5 |
|---|---|---|---|---|---|---|
| Wbc/Wb | - | 0.05 | 0.15 | 0.20 | 0.25 | 0.40 |
| Ec/Em | - | 0.85 | 0.85 | 0.85 | 0.85 | 0.85 |
| Wcc/Wt | - | 0.1 | 0.1 | 0.1 | 0.1 | 0.1 |
| Eb*/Ec* | - | 1.8 | 1.8 | 1.8 | 1.8 | 1.8 |
| Balance in stiffness | 3 | 4 | 9 | 10 | 9 | 4 |
| Transient characteristics | 3 | 4 | 9 | 10 | 9 | 4 |
| Braking performance | 3 | 4 | 8 | 10 | 7 | 4 |
| Traction performance | 5 | 6 | 8 | 10 | 8 | 6 |
| Overall evaluation | 14 | 18 | 34 | 40 | 33 | 18 |

### [Table 2]

**Table 2 Evaluation result**

| | Example 8 | Example 6 | Example 7 | Example 9 | Comparative example 2 |
|---|---|---|---|---|---|
| Wbc/Wb | 0.2 | 0.2 | 0.2 | 0.2 | 0.2 |
| Ec/Em | 0.60 | 0.75 | 0.90 | 0.95 | 1.00 |
| Wcc/Wt | 0.1 | 0.1 | 0.1 | 0.1 | 0.1 |
| Eb*/Ec* | 1.8 | 1.8 | 1.8 | 1.8 | 1.8 |
| Balance in stiffness | 5 | 9 | 8 | 3 | 2 |
| Transient characteristics | 5 | 9 | 8 | 3 | 3 |
| Braking performance | 4 | 9 | 8 | 3 | 2 |
| Traction performance | 6 | 9 | 8 | 5 | 5 |
| Overall evaluation | 20 | 36 | 32 | 14 | 12 |

### [Table 3]

**Table 3 Evaluation result**

| | Example 12 | Example 10 | Example 11 | Example 13 |
|---|---|---|---|---|
| Wbc/Wb | 0.2 | 0.2 | 0.2 | 0.2 |
| Ec/Em | 0.85 | 0.85 | 0.85 | 0.85 |
| Wcc/Wt | 0.03 | 0.05 | 0.20 | 0.35 |
| Eb*/Ec* | 1.8 | 1.8 | 1.8 | 1.8 |
| Balance in stiffness | 6 | 9 | 9 | 5 |
| Transient characteristics | 6 | 9 | 9 | 5 |
| Braking performance | 2 | 9 | 9 | 3 |
| Traction performance | 5 | 9 | 9 | 5 |
| Overall evaluation | 19 | 36 | 36 | 18 |

### [Table 4]

**Table 4 Evaluation result**

| | Comparative example 16 | Example 14 | Example 15 | Example 17 |
|---|---|---|---|---|
| Wbc/Wb | 0.2 | 0.2 | 0.2 | 0.2 |
| Ec/Em | 0.85 | 0.85 | 0.85 | 0.85 |
| Wcc/Wt | 0.1 | 0.1 | 0.1 | 0.1 |
| Eb*/Ec* | 0.5 | 1.3 | 2.0 | 2.5 |
| Balance in stiffness | 5 | 9 | 9 | 2 |
| Transient characteristics | 5 | 9 | 9 | 2 |
| Braking performance | 1 | 10 | 9 | 6 |
| Traction performance | 6 | 9 | 9 | 6 |
| Overall evaluation | 16 | 37 | 36 | 16 |

As indicated in Tables 1 to 4, evaluation is higher in the tires of examples than in tires of comparative examples. In particular, evaluation is extremely high in the tires having the overall evaluation that is not less than 32, as compared to the tires of comparative examples. The evaluation results clearly indicate that the present invention is superior.

The above-described method can be widely applied to tires for two-wheeled automotive vehicles.

## Claims

1. A tire (2) for a two-wheeled automotive vehicle, the tire (2) comprising:
a tread (4) having an outer surface that forms a tread surface (20); and
a band (14) disposed inward of the tread (4) in a radial direction, wherein
the band (14) includes a band cord, and the band cord is helically wound and extends in a circumferential direction,
the band (14) includes a center portion (38) disposed at a center in an axial direction, and a pair of side portions (40) that extend outward from outer ends of the center portion (38) in the axial direction,
a density Ec of the band cord in the center portion (38) is less than a density Em of the band cord in each side portion (40),
an outer end Pb of the band (14) is disposed inward of an axially outer end Pa of an inner surface (42) in the axial direction, and is disposed outward of a straight line RL that defines a rim width, in the axial direction, and
the tread (4) includes a center region (48) provided such that the center portion (38) is disposed inward of the center region (48), a pair of middle regions (50) provided such that the side portions (40) are disposed inward of the middle regions (50), and a pair of shoulder regions (52) disposed adjacent to outer sides, in the axial direction, of the middle regions (50), respectively.

2. The tire (2) according to claim 1, wherein
the tread (4) includes a base layer (22), and a cap layer (24) which is layered outward of the base layer (22) in the radial direction,
a complex elastic modulus Eb* of the base layer (22) is higher than a complex elastic modulus Ec* of the cap layer (24),
the center region (48) includes a base contact region (54) disposed at the center in the axial direction, and a pair of cap contact regions (56) disposed adjacent to outer sides, in the axial direction, of the base contact region (54), and
the base layer (22) forms the tread surface (20) in the base contact region (54), and the cap layer (24) forms the tread surface (20) in each of the cap contact regions (56).

3. The tire (2) according to claim 2, wherein a ratio of a width Wcc of the base contact region (54) to a tread width Wt is not less than 0.05 and not greater than 0.15.

4. The tire (2) according to claim 2 or 3, wherein a ratio of the complex elastic modulus Eb* to the complex elastic modulus Ec* is not less than 1.3 and not greater than 2.0.

5. The tire (2) according to any one of claims 1 to 4, wherein a ratio of a width Wbc of the center portion (38) to a width Wb of the band (14) is not less than 0.1 and not greater than 0.3.

6. The tire (2) according to any one of claims 1 to 5, wherein a ratio of the density Ec to the density Em is not less than 0.75 and not greater than 0.90.

7. The tire (2) according to any one of claims 1 to 6, comprising a belt (12) disposed inward of the band (14) in the radial direction, wherein
an axially outer end of the belt (12) is disposed inward of the axially outer end Pa of the inner surface (42) in the radial direction.

8. The tire (2) according to claim 7, wherein
the belt (12) includes an inner layer (34), and an outer layer (36) that is layered outward of the inner layer (34) in the radial direction, and
an axially outer end Po of the outer layer (36) is disposed between an axially outer end Pb of the band (14) and an axially outer end Pi of the inner layer (34) in the radial direction.
